# EUROPEAN PATENT APPLICATION

(11) **EP 4 697 087 A1**
(43) Date of publication of application: **18.02.2026**
(21) Application number: 24788723.5
(22) Date of filing: 09.04.2024
(51) Int. Cl.: G02F 1/13, G02F 1/137, G02F 1/1334, G02F 1/1347

(54) **LIGHT CONTROL DEVICE**

(30) Priority: 11.04.2023 JP 2023064483; 11.04.2023 JP 2023064484; 11.04.2023 JP 2023064485
(71) Applicant: Toppan Holdings Inc., Tokyo 110-0016 (JP)
(72) Inventor: YOSHIDA, Tetsushi, Tokyo 110-0016 (JP); MICHI, Hiroyuki, Tokyo 110-0016 (JP)
(74) Representative: TBK
(86) International application number: PCT/JP2024/014410
(87) International publication number: WO 2024/214699

(57) **Abstract**

A light control device includes a transparent polymer layer having voids, and a liquid crystal composition containing a liquid crystal compound and a dichroic dye, and contained in the voids, and reversibly changes state from transparent to opaque. The light control device in a transparent state has an absorbance of 0.33 or more and 1.1 or less. The absorbance in a transparent state may be 0.8 or less.

## Description

### [Technical Field]

The present disclosure relates to light control devices which reversibly change state from transparent to opaque.

### [Background Art]

Normal-type light control sheets include a light control layer containing a liquid crystal compound. A drive signal inputted to a light control sheet forms an electric field in the light control layer so as to align the major axes of the molecules of the liquid crystal compound. This causes the normal-type light control sheet to reversibly change state from transparent when driven to opaque when not driven.

Reverse-type light control sheets include a light control layer containing a liquid crystal compound, and an alignment layer that applies an alignment regulating force to the liquid crystal compound. In an example of the alignment regulating force, alignment of the molecules of the liquid crystal compound is regulated so that the major axes of the molecules become substantially perpendicular to the plane of the alignment layer when the light control sheet is not driven. The drive signal inputted to the light control sheet forms an electric field acting against the alignment regulating force so that the major axes of the molecules of the liquid crystal compound become substantially parallel to the plane of the alignment layer. This causes the reverse-type light control sheet to reversibly change state from transparent when not driven to opaque when driven (e.g., see PTL 1).

### [Citation List]

### [Patent Literature]

PTL 1: JP2019-194654A

### [Summary of the Invention]

### [Technical Problem]

A light control sheet comprising a transparent polymer layer, and particles of a liquid crystal composition dispersed in the transparent polymer layer achieves opacity by scattering light due to difference in refractive index between the transparent polymer layer and the particles. Addition of a dichroic dye to the particles achieves colorless transparency when not driven, while imparting color to the opacity when driven.

On the other hand, whether normal type or reverse type, light control sheets containing a dichroic dye in the liquid crystal composition are required recently to suppress variation in contrast of the light control device, i.e., variation in difference in light transmittance between transparent and opaque in the plane of the light control sheet.

### [Solution to Problems]

An aspect of a light control device is a light control device that reversibly changes state from transparent to opaque, including a transparent polymer layer having voids; and a liquid crystal composition containing a liquid crystal compound and a dichroic dye, and contained in the voids, wherein the light control device in the transparent state has an absorbance of 0.33 or more and 1.1 or less.

An aspect of a light control device is a light control device that reversibly changes state from transparent to opaque, including a transparent polymer layer having voids; and a liquid crystal composition containing a liquid crystal compound and a dichroic dye, and contained in the voids, wherein an absorbance difference obtained by subtracting an absorbance of the light control device in the transparent state from an absorbance of the light control device in the opaque state is 0.6 or more.

An aspect of a light control device is a light control device that reversibly changes state from transparent to opaque, including a transparent polymer layer having voids; and a liquid crystal composition containing a liquid crystal compound and a dichroic dye, and contained in the voids, wherein an absorbance ratio that is a ratio of an absorbance of the light control device in the opaque state to an absorbance of the light control device in the transparent state is 2.1 or more.

### [Advantageous Effects of the Invention]

The light control device according to the present disclosure can suppress variation in contrast.

### [Brief Description of the Drawings]

Fig. 1 is a cross-sectional view illustrating a layer structure of a light control device according to First Example.
Fig. 2 is a cross-sectional view illustrating a layer structure of a light control device according to Second Example.
Fig. 3 is a cross-sectional view illustrating a layer structure of a light control sheet.
Fig. 4 is a cross-sectional view illustrating a layer structure of a light control sheet.
Fig. 5 is a graph showing relationship between transmittance difference and contrast according to Test Example 1.
Fig. 6 is a graph showing relationship between absorbance difference and contrast according to Test Example 1.
Fig. 7 is a graph showing relationship between absorbance ratio and contrast according to Test Example 1.
Fig. 8 is a graph showing relationship between absorbance ratio and contrast according to Test Example 2.
Fig. 9 is a graph showing relationship between thickness and absorbance of a light control layer when it is transparent, according to Test Example 1.
Fig. 10 is a graph showing relationship between absorbance and contrast of the light control layer when it is transparent, according to Test Example 1.

### [Description of the Embodiments]

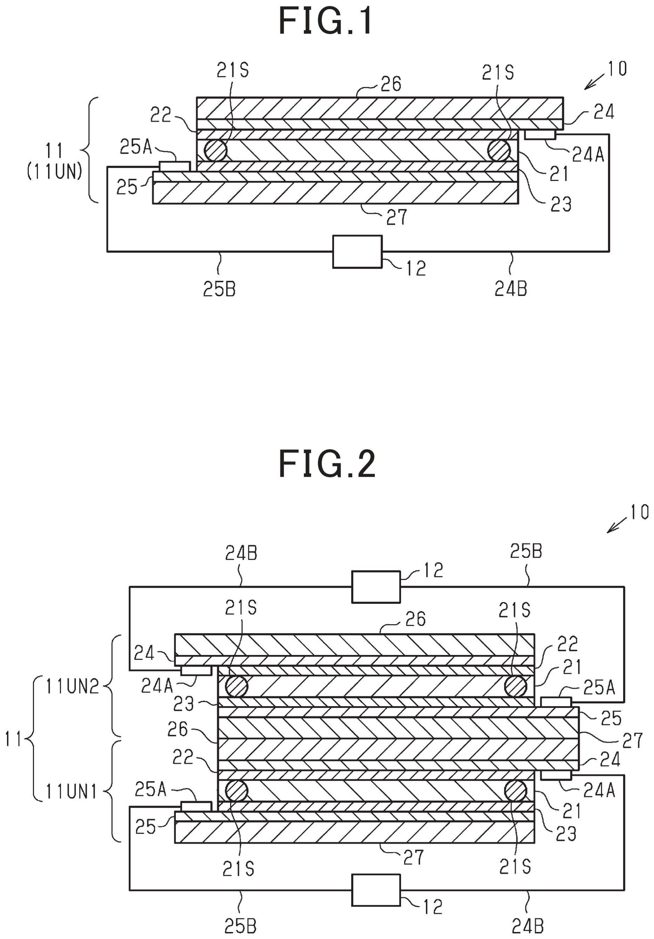

Referring to Figs. 1 to 10, an embodiment of a light control device will be described.

A light control sheet constituting a light control device 10 may be attached to the windows of moving objects, such as vehicles or aircraft. The light control sheet may be attached to the windows of buildings, such as houses, stations, and airports, partitions used in offices, display windows used in stores, screens on which images are projected, and the like. The light control sheet may have a flat surface or curved surface.

The light control sheet reversibly changes state from transparent to opaque. The type of the light control sheet may be a normal type in which the state changes from opaque to transparent upon input of a drive signal, or may be a reverse type in which the state changes from transparent to opaque upon input of a drive signal. The light control device 10 includes at least one light control sheet. The light control sheet included in the light control device 10 may have a single-layer structure constituted of one light control sheet, or may be a laminate in which one light control sheet is overlapped with other light control sheets.

The following description will be given taking an example in which the light control sheet of the light control device 10 is of a reverse type.

### [Light control device 10 of First Example]

As shown in Fig. 1, the light control device 10 according to First Example includes one light control unit 11 and one drive unit 12. The light control unit 11 includes one reverse-type light control sheet. One light control sheet includes a light control layer 21, a first alignment layer 22, a second alignment layer 23, a first transparent electrode layer 24, and a second transparent electrode layer 25. The first alignment layer 22 and the second alignment layer 23 sandwich the light control layer 21 therebetween in the thickness direction of the light control layer 21. The light control layer 21 is located between the first and second alignment layers 22 and 23. The light control layer 21 is in contact with the first and second alignment layers 22 and 23. The first transparent electrode layer 24 and the second transparent electrode layer 25 sandwich the two alignment layers 22 and 23 therebetween in the thickness direction of the light control layer 21. The light control layer 21 is located between the first and second transparent electrode layers 24 and 25. The first transparent electrode layer 24 is in contact with the first alignment layer 22. The second transparent electrode layer 25 is in contact with the second alignment layer 23. The light control sheet includes a first transparent substrate 26 supporting the first transparent electrode layer 24, and a second transparent substrate 27 supporting the second transparent electrode layer 25.

The light control device 10 includes a first electrode 24A attached to part of the first transparent electrode layer 24, and a second electrode 25A attached to part of the second transparent electrode layer 25. The light control device 10 includes first wiring 24B connected to the first electrode 24A, and second wiring 25B connected to the second electrode 25A. The first electrode 24A is connected to the drive unit 12 via the first wiring 24B. The second electrode 25A is connected to the drive unit 12 via the second wiring 25B.

The light control device 10 includes one light control unit 11UN. The light control unit 11UN is a repeating unit in the thickness direction of the light control sheet. The light control device 10 in the example shown in Fig. 1 includes one light control unit 11UN. The light control unit 11UN includes a light control layer 21, a first alignment layer 22, a second alignment layer 23, a first transparent electrode layer 24, and a second transparent electrode layer 25. One light control unit 11UN includes one light control sheet, a first electrode 24A, first wiring 24B, a second electrode 25A, and second wiring 25B. The light control unit 11UN may include other functional layers such as a hard coat layer, UV absorbing layer, and an infrared absorbing layer.

### [Light control device 10 of Second Example]

As shown in Fig. 2, the light control device 10 according to Second Example includes one light control unit 11 and two drive units 12. The light control unit 11 includes two reverse-type light control sheets. One light control sheet includes a light control layer 21, a first alignment layer 22, a second alignment layer 23, a first transparent electrode layer 24, and a second transparent electrode layer 25. The first alignment layer 22 and the second alignment layer 23 sandwich the light control layer 21 therebetween in the thickness direction of the light control layer 21. The light control layer 21 is located between the first and second alignment layers 22 and 23. The light control layer 21 is in contact with the first and second alignment layers 22 and 23. The first transparent electrode layer 24 and the second transparent electrode layer 25 sandwich the two alignment layers 22 and 23 therebetween in the thickness direction of the light control layer 21. The light control layer 21 is located between the transparent electrode layers 24 and 25. The first transparent electrode layer 24 is in contact with the first alignment layer 22. The second transparent electrode layer 25 is in contact with the second alignment layer 23. The light control sheet includes a first transparent substrate 26 supporting the first transparent electrode layer 24. The light control sheet includes a second transparent substrate 27 supporting the second transparent electrode layer 25.

The light control device 10 includes a first electrode 24A attached to part of the first transparent electrode layer 24, and a second electrode 25A attached to part of the second transparent electrode layer 25. The light control device 10 includes first wiring 24B connected to the first electrode 24A, and second wiring 25B connected to the second electrode 25A. The first electrode 24A is connected to the corresponding drive unit 12 via the first wiring 24B. The second electrode 25A is connected to the corresponding drive unit 12 via the second wiring 25B.

The light control device 10 includes two light control units 11UN. The two light control units 11UN are constituted of a first light control unit 11UN1 and a second light control unit 11UN2.

The first light control unit 1 1UN1 has a structure similar to that of the second light control unit 11UN2. The second transparent substrate 27 of the second light control unit 11UN2 is overlapped with the first transparent substrate 26 of the first light control unit 11UN1. The second transparent substrate 27 of the second light control unit 11UN2 is adhered to the first transparent substrate 26 of the first light control unit 11UN1 via an optical transparent adhesive. The light control device 10 constituted of multiple light control units 11UN can lengthen the light path of light entering the light control device 10, compared to the light control device 10 constituted of a single light control unit 11UN.

A first drive unit 12 inputs a drive signal into the first light control unit 11UN1. A second drive unit 12 inputs a drive signal into the second light control unit 11UN2. The two drive units 12 simultaneously bring the first and second light control units 11UN1 and 11UN2 into an opaque state. The two drive units 12 simultaneously bring the first and second light control units 11TUN1 and 11UN2 into a transparent state. The two drive units 12 may separately bring the first and second light control units 11UN1 and 11UN2 into an opaque state. The two drive units 12 may separately bring the first and second light control units 11UN1 and 11UN2 into a transparent state.

The light control device 10 according to Second Example may include one drive unit 12. One drive unit 12 may input a drive signal into the first light control unit 11UN1, and may also input a drive signal into the second light control unit 11TUN2. One drive unit 12 may simultaneously bring the first and second light control units 11UN1 and 11UN2 into an opaque state. One drive unit 12 may simultaneously bring the first and second light control units 11UN1 and 11UN2 into a transparent state. One drive unit 12 may separately bring the first and second light control units 11UN1 and 11UN2 into an opaque state. One drive unit 12 may separately bring the first and second light control units 11UN1 and 11UN2 into a transparent state.

### [Light control sheet]

The light control sheet included in the light control device 10 according to First and Second Examples will be described below.

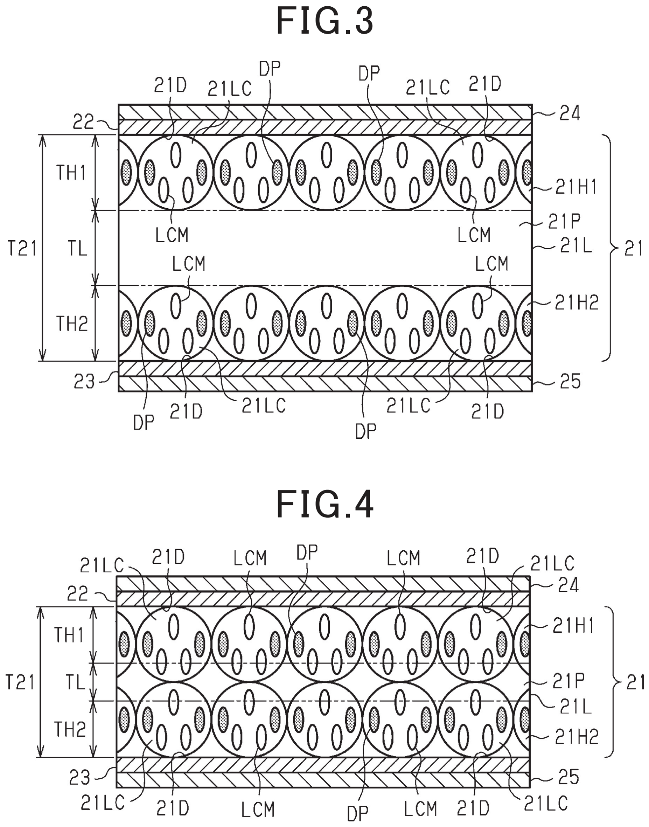

As shown in Fig. 3, the light control sheet 21 includes a transparent polymer layer 21P and a liquid crystal composition 21LC. The transparent polymer layer 21P allows visible light to be transmitted therethrough. The transparent polymer layer 21P contains multiple voids 21D. The transparent polymer layer 21P is a cured product of a polymerizable composition. The transparent polymer layer 21P may be a cured product of a photocurable compound, or may be a cured product of a thermosetting compound. The liquid crystal composition 21LC fills the interior of the voids 21D.

A photocurable compound forming the transparent polymer layer 21P may be at least one selected from the group consisting of acrylate compounds, methacrylate compounds, styrene compounds, thiol compounds, and oligomers of these compounds. The acrylate compound may be at least one selected from the group consisting of monoacrylate compounds, diacrylate compounds, triacrylate compounds, and tetraacrylate compounds. The acrylate compound may be at least one selected from butyl ethyl acrylate, ethylhexyl acrylate, and cyclohexyl acrylate. The methacrylate compound may be at least one selected from the group consisting of dimethacrylate compounds, trimethacrylate compounds, and tetramethacrylate compounds. The methacrylate compound may be at least one selected from the group consisting of N,N-dimethylaminoethyl methacrylate, phenoxyethyl methacrylate, methoxyethyl methacrylate, and tetrahydrofurfuryl methacrylate. The thiol compound may be 1,3-propanedithiol, or may be 1,6-hexanedithiol. The styrene compound may be styrene, or may be methylstyrene.

The liquid crystal composition 21LC comprises a liquid crystal compound LCM and a dichroic dye DP. Other than the liquid crystal compound LCM and the dichroic dye DP, the liquid crystal composition 21LC may comprise a polymerizable composition for forming the transparent polymer layer 21P, a plasticizer for reducing viscosity of the liquid crystal composition 21LC, and the like. The mass ratio of the liquid crystal composition 21LC relative to the total mass of the light control layer 21 may be preferably 30 mass% or more and 70 mass% or less, and more preferably 40 mass% or more and 60 mass% or less. The liquid crystal composition 21LC may further comprise a reactive mesogenic compound. When the liquid crystal compound LCM is aligned vertically, the reactive mesogenic compound is also aligned vertically. When the vertically aligned mesogenic compound forms a network, vertical alignment of the liquid crystal compound LCM is promoted. In other words, the alignment regulating force of the reactive mesogenic compound that has been formed into a network promotes vertical alignment of the liquid crystal compound LCM.

The type of the light control layer 21 is a polymer dispersed type. The polymer dispersed-type light control layer 21 includes a transparent polymer layer 21P that defines numerous voids 21D therein. The liquid crystal composition 21LC is retained in the voids 21D dispersed in the transparent polymer layer 21P. The polymer dispersed-type light control layer 21 may be a polymer network-type light control layer 21, or may be a capsule-type light control layer 21. A polymer network-type light control layer 21 may include a 3D-mesh transparent polymer layer 21P, while retaining the liquid crystal composition 21LC in the mutually-communicating mesh voids 21D. A capsule-type light control layer 21 may retain the liquid crystal composition 21LC in the capsule-shaped voids 21D dispersed in the transparent polymer layer 21P.

The liquid crystal compound LCM may be at least one selected from the group consisting of Schiff base compounds, azo compounds, azoxy compounds, biphenyl compounds, terphenyl compounds, benzoic acid ester compounds, tolan compounds, pyrimidine compounds, cyclohexanecarboxylic acid ester compounds, phenylcyclohexane compounds, and dioxane compounds.

An NI point of the liquid crystal compound LCM is the temperature at which the liquid crystal compound LCM undergoes phase transition from a nematic phase (N phase) to an isotropic liquid phase (I phase). The NI point of the liquid crystal compound LCM indicates the degree to which the anisotropy of the liquid crystal compound LCM disappears at the ambient temperature. The NI point of the liquid crystal compound LCM reflects at least in part the degree of intermolecular interaction in the liquid crystal compound LCM. If the liquid crystal compound LCM is a combination of two or more compounds, the NI point of the liquid crystal compound LCM is a weighted average of the NI points of the individual compounds, weighted according to the formulation ratio of each compound. The NI point of the liquid crystal compound LCM can be increased or decreased by the composition of two or more liquid crystal compounds LCM having mutually different NI points. If it is required to enhance the alignment order of the liquid crystal compound LCM at a high environmental temperature such as 100°C, the NI point is preferably 100°C or higher. If it is required to improve homogenization of the polymerizable composition for forming the transparent polymer layer 21P and the liquid crystal compound LCM, the NI point is preferably 145°C or lower.

A CN point of the liquid crystal compound LCM is the temperature at which the liquid crystal compound LCM undergoes phase transition from a liquid crystal phase (C phase) to a nematic phase (N phase). The CN point of the liquid crystal compound LCM indicates the degree to which the fluidity of the liquid crystal compound LCM disappears at the ambient temperature. If the liquid crystal compound LCM is a combination of two or more compounds, the CN point of the liquid crystal compound LCM is lower than a weighted average of the CN points of the individual compounds, weighted according to the formulation ratio of each compound. The CN point of the liquid crystal compound LCM can be increased or decreased by the composition of two or more compounds having mutually different CN points. If it is required to increase fluidity of the liquid crystal compound LCM at a low environmental temperature such as -20°C, the CN point is preferably 25°C or lower, and more preferably 0°C or lower.

A refractive index difference Δn (Δn=extraordinary refractive index ne - ordinary refractive index no) between the major axis direction and the minor axis direction of the liquid crystal compound LCM indicates the degree of attractive or repulsive force in the liquid crystal compound LCM. The refractive index difference Δn of the liquid crystal compound LCM is the difference in refractive index for visible light having a wavelength of 650 nm, and indicates the difference in the degree of scattering of visible light between when a drive signal is supplied and when it is not supplied. If the liquid crystal compound LCM is a combination of two or more compounds, the upper limit of the refractive index difference Δn of the liquid crystal compound LCM is an upper limit among the refractive index differences Δn of all the compounds. The lower limit of the refractive index difference Δn of the liquid crystal compound LCM is a lower limit among the refractive index differences Δn of all the compounds.

If it is required to enhance the alignment controllability of the liquid crystal compound LCM at a high environmental temperature, the lower limit of the refractive index difference Δn is preferably higher. If it is required to increase the haze difference between transparent and opaque states, the lower limit of the refractive index difference Δn is preferably higher. If it is required to enhance the alignment controllability of the liquid crystal compound LCM at a high environmental temperature such as 100° C, the lower limit of the refractive index difference Δn of the liquid crystal compound LCM is preferably 0.05, and more preferably 0.1. If it is required to increase the haze difference, the lower limit of the refractive index difference Δn of the liquid crystal compound LCM is preferably 0.05, and more preferably 0.1.

The dichroic dye DP enhances absorbance of visible light in the molecular major axisdirection even more than the absorbance in the molecular minor-axis direction. The dichroic dye DP is driven with a host-guest system using the liquid crystal compound LCM as a host. The dichroic dye DP reversibly changes state from transparent to colored in accordance with the change in alignment of the liquid crystal compound LCM. The liquid crystal composition 21LC may comprise one dichroic dye DP, or may comprise two or more dichroic dyes DP in combination. The combination of dichroic dyes DP is appropriately adjusted so that the color exhibited by the combination of dichroic dyes DP is the color exhibited by the light control sheet when it is opaque.

The color exhibited by the light control sheet when it is opaque may be black, or may be black with a chromatic color. An example of the dichroic dye DP is one that allows the chromaticity a* of the CIE 1976 (L*a*b*) color system in an opaque light control sheet to be -15 or more and 15 or less, and the chromaticity b* thereof to be -15 or more and 15 or less. The chromaticity a* and chromaticity b* in the CIE 1976 (L*a*b*) color system are specified in accordance with the method of calculating color coordinates in the CIE 1976 (L*a*b*) color space defined in JIS-Z-8781-4 (ISO 11664-4). The mass ratio of the dichroic dye DP relative to the total mass of the light control layer 21 corresponds to the formulation ratio of the dichroic dye DP. The formulation ratio of the dichroic dye DP may be preferably 0.2 mass% or more and 5 mass% or less, more preferably 1 mass% or more and 4 mass% or less, and even more preferably 2 mass% or more and 4 mass% or less. Increasing the formulation ratio of the dichroic dye DP may increase contrast of the light control device 10 but may decrease responsiveness of the liquid crystal compound LCM. From the perspective of increasing contrast of the light control device 10, the formulation ratio of the dichroic dye DP is preferably at the upper limit in the range in which the responsiveness of the liquid crystal compound LCM can be obtained.

The dichroic dye DP is driven with a host-guest system using the liquid crystal compound LCM as a host, and thereby develops a specific color. The dichroic dye DP may be at least one selected from the group consisting of polyiodine, azo compounds, anthraquinone compounds, naphthoquinone compounds, azomethine compounds, tetrazine compounds, quinophthalone compounds, merocyanine compounds, perylene compounds, and dioxazine compounds. The dichroic dye DP may be a single compound or may be a combination of two or more compounds. If light resistance and dichroic ratio are required to be increased, the dichroic dye DP is preferably at least one selected from the group consisting of azo compounds and anthraquinone compounds, and more preferably an azo compound.

The light control layer 21 may include spacers 21S (see Fig. 1). The spacers 21S are dispersed throughout the light control layer 21. The spacers 21S determine the thickness of the light control layer 21 around the spacers 21S to be the thickness of the spacers 21S, and make the thickness of the light control layer 21 uniform. The spacers 21S may be bead spacers, or may be photo spacers formed by exposure and development of a photo resist. The spacers 21S may be colorless and transparent, or may be colored and transparent. If it is required to reduce visibility of the spacers 21S when the light control sheet is opaque, or to reduce brightness of the color exhibited when the light control sheet is opaque, the color exhibited by the spacers 21S may be the same color as the color exhibited when the light control sheet is opaque, or may be the same color as the color exhibited by the dichroic dye DP.

The light control layer 21 may preferably have a thickness of 2 µm or more and 30 µm or less, or more preferably 5 µm or more and 25 µm or less. If it is required to enhance the effect of the alignment regulating force on the liquid crystal compound LCM, the thickness of the light control layer 21 is preferably 5 µm or more and 25 µm or less. If the transparent polymer layer 21P is formed by phase separation, the thickness of the light control layer 21 being 5 µm or more enables uneven distribution of the voids 21D having a diameter of 1 µm or less. Regions in which the density of the liquid crystal composition 21LC is different can be generated in the light control layer 21 in the thickness direction thereof. If the thickness of the light control layer 21 is 25 µm or less, and if a coating liquid containing the liquid crystal compound LCM and a polymerizable composition is exposed to light during production of the light control layer 21, the liquid crystal compound LCM and the transparent polymer layer 21P can be appropriately phase-separated.

The first alignment layer 22 exerts an alignment regulating force on the liquid crystal compound LCM from the surface of the light control layer 21 contacting the first alignment layer 22. The second alignment layer 23 exerts an alignment regulating force on the liquid crystal compound LCM from the surface of the light control layer 21 contacting the second alignment layer 23 . The alignment layers 22 and 23 allow visible light to be transmitted therethrough. The alignment layers 22 and 23 may be vertical alignment layers. The alignment regulating force applied by vertical alignment layers aligns molecules of the liquid crystal compound LCM so that the major axes thereof are perpendicular to the surface of the alignment layers 22 and 23 contacting the light control layer 21. The alignment layers 22 and 23 may align molecules of the liquid crystal compound LCM so that the major axes thereof are tilted by several degrees from the vertical direction within the range that the axes are regarded to be substantially perpendicular to the transparent electrode layers 24 and 25. The thickness of the alignment layers 22 and 23 may be preferably 0.02 µm or more and 0.5 µm or less, or more preferably 0.05 µm or more and 0.3 µm or less.

The material constituting the alignment layers 22 and 23 may be an organic compound, inorganic compound, or organic-inorganic composite material. The material constituting the first alignment layer 22 and the material constituting the second alignment layer 23 may be the same as or different from each other. The organic compound constituting the alignment layers 22 and 23 may be at least one selected from the group consisting of polyimides, polyamides, polyvinyl alcohols, and cyanide compounds. The inorganic compound constituting the alignment layers 22 and 23 may be silicon oxide or zirconium oxide. The organic-inorganic composite material constituting the alignment layers 22 and 23 may be silicone with inorganic and organic structures.

The first and second transparent electrode layers 24 and 25 form an electric field in the thickness direction of the light control layer 21 in response to the input of a drive signal. The transparent electrode layers 24 and 25 allow visible light to be transmitted therethrough. The transparent electrode layers 24 and 25 may each have a thickness of 0.005 µm or more and 0.1 µm or less.

The material constituting the transparent electrode layers 24 and 25 may be an inorganic compound, organic compound, or organic-inorganic composite material. The inorganic compound constituting the transparent electrode layers 24 and 25 may be at least one selected from the group consisting of indium tin oxide, fluorine-doped tin oxide, tin oxide, and zinc oxide. The organic compound constituting the transparent electrode layers 24 and 25 may be poly(3,4-ethylenedioxythiophene). The organic-inorganic composite material constituting the transparent electrode layers 24 and 25 may be an organic compound containing metal nanowires.

The first transparent substrate 26 supports the first transparent electrode layer 24. The second transparent substrate 27 supports the second transparent electrode layer 25. The transparent substrates 26 and 27 may be flexible so as to conform to the curved surface to which the light control sheet is attached, or may be rigid so as not to deform under its own weight. At least one of the transparent substrates 26 and 27 is attached to an object to which the light control device 10 is applied. The transparent substrates 26 and 27 may each have a thickness of 15 µm or more and 250 µm or less. The transparent substrates 26 and 27 having a thickness of 15 µm or more enhance mechanical durability of the light control sheet and chemical durability of the light control layer 21. If the thickness of the transparent substrates 26 and 27 is 250 µm or less, the light control sheet can be produced using a roll-to-roll method.

The material constituting the transparent substrates 26 and 27 may be an organic compound, or may be an inorganic compound. The organic compound constituting the transparent substrates 26 and 27 may be at least one selected from the group consisting of polyesters, polyacrylates, polycarbonates, and polyolefins. The inorganic compound constituting the transparent substrates 26 and 27 may be at least one selected from the group consisting of silicon dioxide, silicon oxynitride, and silicon nitride. The adhesive applied to the transparent substrates 26 and 27 is a resin having transparency and adhesiveness and insulating properties. The adhesive applied to the transparent substrates 26 and 27 may be, for example, an optically clear adhesive (OCA).

The electrodes 24A and 25A may each be a flexible printed circuit board or a metal tape. The electrodes 24A and 25A may be attached to the respective transparent electrode layers 24 and 25 via a conductive adhesive layer. The drive unit 12 inputs a drive signal to the light control layer 21 via the transparent electrode layers 24 and 25 . The drive signal may be an AC voltage signal, or may be a DC voltage signal.

The light control layer 21 changes the alignment in the liquid crystal compound LCM by changing the electric field formed between the two transparent electrode layers 24 and 25 . Alignment change in the liquid crystal compound LCM changes the degrees of scattering, absorption, and transmission of visible light entering the light control layer 21.

When an electric field is formed in the light control layer 21, i.e., when a potential difference is applied between the two transparent electrode layers 24 and 25, the units 11UN1 and 11UN2 each drive the liquid crystal compound LCM against the alignment regulating forces of the alignment layers 22 and 23, etc., and have a relatively high haze. When a voltage is applied to the light control layer 21, the units 11UN1 and 11UN2 each become turbid, i.e., opaque, due to light scattering caused by the difference in refractive index between the transparent polymer layer 21P and the liquid crystal compound LCM. Following the driving of the liquid crystal compound LCM, molecules of the dichroic dye DP are aligned so as to increase absorbance. Consequently, when a voltage is applied to the light control layer 21, the units 11UN1 and 11UN2 become colored and opaque.

When no voltage is applied to the light control layer 21, i.e., when no potential difference is applied between the two transparent electrode layers 24 and 25, the units 11UN1 and 11UN2 have a lower haze than when there is a potential difference, following the alignment regulating forces of the respective alignment layers 22 and 23, etc. When no voltage is applied to the light control layer 21, the units 11UN1 and 11UN2 each reduce the difference in refractive index between the transparent polymer layer 21P and the liquid crystal compound LCM to suppress light scattering in the light control layer 21. Following the alignment in the liquid crystal compound LCM, molecules of the dichroic dye DP are aligned so as to reduce absorbance. Consequently, when no voltage is applied to the light control layer 21, the units 11UN1 and 11UN2 become transparent.

The state in which one light control sheet is colored and opaque corresponds to the dark state of the light control device 10 of the First Example. The state in which the units 11UN1 and 11UN2 are colored and opaque corresponds to the dark state of the light control device 10 of the Second Example. The colored and opaque state may be a black and opaque state, or may be an opaque state colored with colors other than black.

The state in which one light control sheet is transparent corresponds to the bright state of the light control device 10 of First Example. The state in which the units 11UN1 and 11UN2 are transparent corresponds to the bright state of the light control device 10. The transparent state may be a colorless and transparent state, or may be a colored and transparent state. The colored and transparent state may be a black and transparent state, or may be a transparent state colored with colors other than black.

The light control sheet may be translucent that is intermediate between transparent and opaque. The translucent state may be a colorless and translucent state, or may be a colored and translucent state. The colored and translucent state may be a black and translucent state, or may be a translucent state colored with colors other than black. The drive unit 12 achieving translucency sets the voltage applied to the light control layer 21 to an intermediate value between transparent and opaque.

The total light transmittance of the light control device 10 in the dark state is lower than the total light transmittance of the light control device 10 in the bright state. In the light control device 10 of Second Example, the first light control unit 1 1UN1 may be colored and opaque, and the second light control unit 11UN2 may be colored and opaque. In the light control device 10, the first light control unit 11UN1 may be opaque, and the second light control unit 11UN2 may be translucent. In the light control device 10 of Second Example, the first light control unit 11UN1 may be opaque, and the second light control unit 11UN2 may be transparent.

### [Distribution of voids 21D]

In Figs. 3 and 4, for convenience of illustration, the transparent substrates 26 and 27 are omitted. In Figs. 3 and 4, for the convenience of explaining the structure of the light control layer 21, the ratio of the thickness of the light control layer 21 to the thickness of each of the alignment layers 22 and 23 and the transparent electrode layers 24 and 25 is larger than the actual ratio. Figs. 3 and 4 schematically illustrate the light control layer 21 in the state in which no potential difference is applied between the transparent electrode layers 24 and 25.

As shown in Fig. 3, an example of the light control layer 21 may include a first high-density portion 21H1, a second high-density portion 21H2, and a low-density portion 21L.

The density of the liquid crystal composition 21LC per unit thickness in the first high-density portion 21H1 is higher than the density of the liquid crystal composition 21LC per unit thickness in the low-density portion 21L. The volume density of the voids 21D per unit thickness in the first high-density portion 21H1 is higher than the volume density of the voids 21D per unit thickness in the low-density portion 21L. The first high-density portion 21H1 is in contact with the first alignment layer 22.

The density of the liquid crystal composition 21LC per unit thickness in the second high-density portion 21H2 is higher than the density of the liquid crystal composition 21LC per unit thickness in the low-density portion 21L. The volume density of the voids 21D per unit thickness in the second high-density portion 21H2 is higher than the volume density of the voids 21D per unit thickness in the low-density portion 21L. The second high-density portion 21H2 is in contact with the second alignment layer 23.

The density of the liquid crystal composition 21LC in the light control layer 21 is the lowest at an intermediate portion of the light control layer 21 in the thickness direction. The intermediate portion of the light control layer 21 in the thickness direction is a portion closer to the center of the light control layer 21 than the two opposing surfaces of the light control layer 21 in the thickness direction. The density of the liquid crystal composition 21LC per unit thickness in each portion of the light control layer 21 is calculated by dividing the volume of the liquid crystal composition 21LC contained in each portion by the thickness of the portion. The density of the liquid crystal composition 21LC in the light control layer 21 may be the lowest in a portion including the center of the light control layer 21 in the thickness direction. Since the light control layer 21 is very thin, instead of calculating the volume of the liquid crystal composition 21LC contained in the light control layer 21, each density may be calculated as an approximate value using the area of the liquid crystal composition 21LC and the area of the light control layer 21 obtained from an SEM image of a cross section of the light control layer 21.

The volume density of the voids 21D in the transparent polymer layer 21P is the lowest at an intermediate portion of the light control layer 21 in the thickness direction. The volume density of the voids 21D per unit thickness in each portion of the transparent polymer layer 21P is calculated by dividing the quantity of the voids 21D contained in each portion by the thickness of the portion. The volume density of the voids 21D in the transparent polymer layer 21P may be the lowest at a portion including the center of the light control layer 21 in the thickness direction.

Molecules of the liquid crystal compound LCM being unevenly distributed in the transparent polymer layer 21P in the vicinities of the alignment layers 22 and 23 enhances the effect of the alignment regulating forces of the alignment layers 22 and 23. Such uneven distribution of molecules of the liquid crystal compound LCM enhances light transmittance of the light control device 10 when it is transparent.

In the light control layer 21, for example, a thickness TH1 of the first high-density portion 21H1, a thickness TH2 of the second high-density portion 21H2, and a thickness TL of the low-density portion 21L are substantially equal to each other. In other words, in an example, the thickness TH1 of the first high-density portion 21H1, the thickness TH2 of the second high-density portion 21H2, and the thickness TL of the low-density portion 21L are each 1/3 of a thickness T21 of the light control layer 21. The thickness TL of the low-density portion 21L may be greater than or less than each of the thicknesses TH1 and TH2 of the high-density portions 21H1 and 21H2. The thickness TH1 of the first high-density portion 21H1 may be equal to or different from the thickness of the second high-density portion 21H2.

In a cross section taken along the thickness direction of the light control layer 21, the percentage of the sum of the areas of the voids 21D included in the low-density portion 21L with respect to the area of the low-density portion 21L may be 10% or less. This can reduce the proportion of the liquid crystal composition 21LC retained in the voids 21D in the low-density portion 21L, thereby preventing the liquid crystal compound LCM contained in the low-density portion 21L from increasing the opacity of the light control sheet in the state in which no potential difference is applied between the transparent electrode layers 24 and 25.

The low-density portion 21L does not necessarily have to contain the voids 21D. In other words, the low-density portion 21L does not necessarily have to contain the liquid crystal composition 21LC. This may allow all molecules of the liquid crystal compound LCM contained in the light control layer 21 to easily align following the alignment regulating forces such as of the alignment layers 22 and 23 or the reactive mesogenic compound, thereby further reducing haze of the light control sheet in the state in which no potential difference is applied between the transparent electrode layers 24 and 25.

In this way, in the low-density portion 21L, the sum of the areas of the voids 21D relative to the area of the low-density portion 21L may be preferably 10% or less, more preferably 5% or less, and even more preferably 0%. The voids 21D may be located in a range of 3.0 µm or less from the first alignment layer 22 and in a range of 3.0 µm or less from the second alignment layer 23 in a cross section taken along the thickness direction of the light control layer 21.

If it is required to increase the alignment regulating force acting on the liquid crystal compound LCM, the voids 21D included in the first high-density portion 21H1 are preferably in contact with the first alignment layer 22. Also, the voids 21D included in the second high-density portion 21H2 are preferably in contact with the second alignment layer 23.

In the light control sheet, the thickness T21 of the light control layer 21 may be 2 µm or more and 30 µm or less, and the diameter of the voids 21D may be 0.1 µm or more and 2 µm or less. The diameter of the voids 21D corresponds to the diameter of the circle circumscribing the void 21D in a cross section taken along the thickness direction of the light control layer 21. If the thickness of the light control layer 21 is 2 µm or more and 30 µm or less and the diameter of the voids 21D is 0.1 µm or more and 2 µm or less, formation of the voids 21D at positions away from the alignment layers 22 and 23 may be suppressed. If the size of the voids 21D is 0.1 µm or more and 2 µm or less, the liquid crystal composition 21LC may be retained in the vicinities of the alignment layers 22 and 23. Therefore, transparency of the light control sheet can be enhanced when there is no voltage difference between the transparent electrode layers 24 and 25. If it is required to increase the degree of light scattering by the voids 21D, the size of the voids 21D is preferably 2 µm or less. If it is required to suppress the degree of narrow-angle light scattering by the voids 21D, the size of the voids 21D is preferably small, 0.1 µm or less.

As shown in Fig. 4, another example of the light control layer 21 includes one void layer formed of multiple voids 21D contacting the first alignment layer 22, and one void layer formed of multiple voids 21D contacting the second alignment layer 23. In each void layer, voids 21D are arranged parallel to the interface between each of the alignment layers 22 and 23 and the light control layer 21.

The void layer contacting the first alignment layer 22 includes at least one void 21D in contact with any of the voids 21D in the void layer contacting the second alignment layer 23. The voids 21D contained in the void layer contacting the first alignment layer 22 may be in contact with some of the voids 21D contained in the void layer contacting the second alignment layer 23.

In the void layer contacting the first alignment layer 22, the surface in contact with the first alignment layer 22 is a first surface, and the surface facing away from the first surface is a second surface. The second surface is a plane including portions of the voids 21D contained in the void layer, which are farthest from the first alignment layer 22. In the void layer contacting the second alignment layer 23, the surface contacting the second alignment layer 23 is a first surface, and the surface facing away from the first surface is a second surface. The second surface is a plane including portions of the voids 21D contained in the void layer, which are farthest from the second alignment layer 23. The second surface of the void layer contacting the first alignment layer 22 and the second surface of the void layer contacting the second alignment layer 23 may be the same plane.

Another example of the light control layer 21 may include a first high-density portion 21H1, a second high-density portion 21H2, and a low-density portion 21L. In the thickness direction of the light control layer 21, the low-density portion 21L is sandwiched between the first high-density portion 21H1 and the second high-density portion 21H2. The low-density portion 21L includes portions where the voids 21D are not located in the void layer contacting the first alignment layer 22, and also includes portions where the voids 21D are not located in the void layer contacting the second alignment layer 23. The density of the liquid crystal composition 21LC in the low-density portion 21L is lower than the density of the liquid crystal composition 21LC in the first high-density portion 21H1 and the density of the liquid crystal composition 21LC in the second high-density portion 21H2. The density of the liquid crystal composition 21LC in the intermediate portion of the light control layer 21 in the thickness direction is the lowest in the light control layer 21.

### [Method of producing light control sheet]

When producing a light control sheet, first, transparent substrates 26 and 27 on which respective transparent electrode layers 24 and 25 are formed are prepared. Next, alignment layers 22 and 23 are formed on the respective transparent electrode layers 24 and 25 . Next, a coating liquid is applied to the alignment layers 22 and 23 . The coating liquid contains a polymerizable composition for forming a transparent polymer layer 21P, a liquid crystal compound LCM, and a dichroic dye DP. The polymerizable composition is a monomer, oligomer, or polymer which can be polymerized by UV irradiation. Next, the coating liquid is irradiated with UV light through the transparent electrode layers 24 and 25. Thus, a transparent polymer layer 21P having voids 21D is formed, with the liquid crystal compound LCM and the dichroic dye DP retained in the voids 21D.

When the coating liquid is cured by UV irradiation, the liquid crystal composition 21LC containing the liquid crystal compound LCM and the dichroic dye DP is distributed substantially uniformly in the polymerizable composition. Next, the polymerizable composition begins to be cured in the vicinities of the alignment layers 22 and 23, and molecules of the liquid crystal composition 21LC separate from the polymer of the polymerizable composition. Portions of the liquid crystal composition 21LC present in the coating film are likely to be stabilized by being integrated with the separated liquid crystal composition 21LC, and therefore move toward the alignment layers 22 and 23. Then, the polymerizable composition is substantially entirely cured, thereby forming a transparent polymer layer 21P having voids 21D each containing the liquid crystal composition 21LC.

Until the transparent polymer layer 21P is formed, portions of the liquid crystal composition 21LC separated from each other gather together to stabilize the energy. If the rate of curing of the polymerizable composition is high, or if the rate of moving of the liquid crystal composition 21LC is high, the liquid crystal composition 21LC is encouraged to gather over a wide area, and the size of the voids 21D becomes large. The rate of curing of the polymerizable composition can be increased by raising the temperature of the coating liquid when it is subjected to irradiation. On the other hand, if the polymerizable composition is simultaneously cured over a wide range, the voids 21D become separated from other voids 21D before the liquid crystal composition 21LC gathers. Increasing the range of simultaneous curing of the polymerizable composition can be achieved by increasing the intensity of the UV light applied to the coating liquid. Since there is a limit to the size that voids 21D can grow, further increase of the curing rate of the polymerizable composition tends to expand the range of forming the voids 21D into the low-density portion 21L.

### [Contrast]

Contrast of the light control device 10 corresponds to the ratio of the total light transmittance in a transparent state to the total light transmittance in an opaque state. In other words, contrast of the light control device 10 corresponds to the ratio of the total light transmittance in a bright state to the total light transmittance in a dark state.

The light control layer 21 of the light control device 10 changes the alignment in the liquid crystal compound LCM by changing the voltage between the two transparent electrode layers 24 and 25. Alignment change in the liquid crystal compound LCM changes the degrees of scattering, absorption, and transmission of visible light entering the light control layer 21. Scattering of visible light imparts the light control layer 21 with turbidity, i.e., opacity or translucency. Scattering and absorption of visible light impart the light control layer 21 with dark opacity or dark translucency. Total light transmitted through the light control device 10 includes straight transmitted light that passes through the light control device 10 without being scattered by the light control device 10 and scattered light that is scattered by the light control device 10. Total light transmittance of the light control device 10 depends on the sum of the intensity of straight transmitted light and the intensity of scattered light. Even if the sum of the intensity of straight transmitted light and the intensity of scattered light is constant, the intensity of scattered light caused by the light control device 10 changes.

As described above, the dichroic dye DP enhances absorbance of visible light in the major-axis direction of the molecules more than the absorbance of visible light in the minor-axis direction of the molecules. Increasing the formulation ratio of the dichroic dye DP in the liquid crystal composition 21LC simply reduces the intensity of scattered light passing through the light control device 10. Increasing the formulation ratio of the dichroic dye DP can reduce the total light transmittance by the amount of decrease in intensity of scattered light, thereby improving contrast. However, increasing the formulation ratio of the dichroic dye DP decreases responsiveness of the liquid crystal compound LCM. Therefore, the formulation ratio of the dichroic dye DP is actually set to approximately the upper limit in the range in which responsiveness of the liquid crystal compound LCM can be obtained. After all, from the perspective of increasing contrast in the light control device 10, there is a limit in increasing the formulation ratio of the dichroic dye DP.

On the other hand, the absorption characteristics of the dichroic dye DP are such that it exhibits high absorbance for scattered light and low absorbance for straight transmitted light based on the dichroic ratio. Absorbance of the dichroic dye DP increases exponentially and sharply, with the light path length in the light control device 10 as a variable. Promoting scattering of straight transmitted light in the light control device 10 reduces total light transmittance in an opaque state by improving the degree of absorbance of the dichroic dye DP, thereby enabling improvement of contrast. However, in order to sharply increase light absorption by the dichroic dye DP, it is necessary not only to simply promote scattering of straight transmitted light, but also to increase light scattering to such an extent that the light scattered at the interface between the transparent polymer layer 21P and the liquid crystal composition 21LC reaches the dichroic dye DP.

The light control layer 21 of the light control sheet is formed due to curing of a coating film. The coating film contains a polymerizable composition for forming a transparent polymer layer 21P, a liquid crystal compound LCM, and a dichroic dye DP. When the coating film is irradiated with UV light for polymerizing the polymerizable composition, the polymerizable composition begins to cure from the site irradiated with the UV light, and the liquid crystal composition 21LC undergoes phase separation from the polymer of the polymerizable composition.

On the other hand, the phase separation of the liquid crystal composition 21LC causes the concentration of the dichroic dye DP to vary between the voids 21D. For example, when the rate of phase separation of the liquid crystal composition 21LC is high, a large number of voids 21D may be formed instantaneously. Therefore, before the concentration diffusion of the dichroic dye DP reaches equilibrium between the voids 21D, the concentration gradient of the dichroic dye DP between the voids 21D may be fixed together with the formation of the voids 21D. Consequently, in many portions scattered across the light control layer 21, concentration of the dichroic dye DP may vary due to insufficient concentration diffusion. For example, if the rate of phase separation of the liquid crystal composition 21LC is low, voids 21D may be formed sequentially from the portion irradiated with the UV light. Therefore, phase separation of the liquid crystal composition 21LC may progress in the direction in which formation of the voids 21D progresses spatially. Consequently, a gradient may be formed in the density of the voids 21D in the direction in which formation of the voids 21D progresses, and variation in density of the voids 21D may cause variation in concentration of the dichroic dye DP.

As described above, the formulation ratio of the dichroic dye DP is set to approximately the upper limit in the range in which responsiveness of the liquid crystal compound LCM can be obtained. Increasing the concentration of the dichroic dye DP to such an upper limit increases variation in concentration of the dichroic dye DP which is due to phase separation of the liquid crystal composition 21LC.

The thickness of the light control layer 21 in a reverse-type light control sheet that uses an alignment regulating force is required to be thinner than the light control layer 21 in a normal-type light control sheet, because the alignment regulating force is applied throughout the thickness of the light control layer. Reverse-type light control sheets, in which the thickness of the light control layer 21 is limited, are less likely to enhance contrast than normal-type light control sheets. Furthermore, in reverse-type light control sheets in which the alignment regulating force continues to act, it is more difficult to obtain random alignment in the liquid crystal compound LCM than in normal-type light control sheets. Light control sheets, in which random alignment is difficult to obtain, are less likely to further increase contrast. For this reason, while improved contrast is required for light control sheets whether they are normal type or reverse type, increased contrast is particularly desired for reverse-type light control sheets compared to normal-type light control sheets.

### [Absorbance of light control device 10]

The inventor of the present application has conducted extensive research into the relationship between contrast of the light control device 10 and optical characteristics of the light control device 10, and has found ranges for sharply increasing contrast in absorbance difference (i) of the light control device 10, absorbance ratio (ii) of the light control device 10, and absorbance (iii) of the light control device 10 in a transparent state. The inventor, through intensive research into the relationship between contrast of the light control device 10 and optical characteristics of the light control device 10, has found a range in the absorbance (iii) of the light control device 10 in a transparent state, which suppresses contrast variations.

If it is required to increase contrast, the light control device 10 of First and Second Examples may satisfy at least one selected from the group consisting of the following (Condition 1A), (Condition 2A), and (Condition 3A). It should be noted that satisfying at least one selected from the group consisting of (Condition 1A), (Condition 2A), and (Condition 3A) may mean satisfying (Condition 1A), (Condition 2A), or (Condition 3A). Satisfying at least one selected from the group consisting of (Condition 1A), (Condition 2A), and (Condition 3A) may mean satisfying a combination of two or more selected from the group consisting of (Condition 1A), (Condition 2A), and (Condition 3A).

If the light control device 10 satisfies (Condition 1A), the light control device 10 may further satisfy at least one selected from the group consisting of (Condition 1B) to (Condition 1D). If the light control device 10 satisfies (Condition 1A), the light control device 10 may further satisfy (Condition 2B) or (Condition 2C). If the light control device 10 satisfies (Condition 1A), the light control device 10 may further satisfy (Condition 3B).

If the light control device 10 satisfies (Condition 2A), the light control device 10 may further satisfy (Condition 2B) or (Condition 2C). If the light control device 10 satisfies (Condition 2A), the light control device 10 may further satisfy (Condition 3B).

The light control device 10 of First and Second Examples may satisfy (Condition 3A) if it is required to suppress variation in contrast. If the light control device 10 satisfies (Condition 3A), the light control device 10 may further satisfy (Condition 3B).
(Condition 1A) Absorbance difference (i) of the light control device 10 is 0.6 or more.
(Condition 1B) Absorbance difference (i) of the light control device 10 is 1.3 or less.
(Condition 1C) Absorbance difference (i) of the light control device 10 is 0.8 or more and 1.2 or less.
(Condition 1D) Total light transmittance of the light control device 10 in a dark state, i.e., opaque state, is 7% or less.
(Condition 2A) Absorbance ratio (ii) of the light control device 10 is 2.1 or more.
(Condition 2B) Absorbance ratio (ii) of the light control device 10 is 3.3 or more.
(Condition 2C) Contrast of the light control device 10 is 4 or more.
(Condition 3A) Absorbance (iii) of the light control device 10 in a bright state, i.e., transparent state, is 0.33 or more and 1.1 or less.
(Condition 3B) Absorbance (iii) of the light control device 10 in a bright state, i.e., transparent state, is 0.8 or less.

The absorbance difference of the light control device 10 is a value obtained by subtracting the absorbance of the light control device 10 in a bright state, i.e., transparent state, from the absorbance of the light control device 10 in a dark state, i.e., opaque state.

The absorbance ratio of the light control device 10 is a ratio of the absorbance of the light control device 10 in a dark state, i.e., opaque state, to the absorbance of the light control device 10 in a bright state, i.e., transparent state.

The absorbance of the light control device 10 is generally measured using an absorptiometer conforming to JIS K 0115:2004. This measurement method uses linear transmittance to distinguish between the absorbance of a sample and the attenuation of light due to light scattering by the sample. In other words, this measurement method is based on the premise that the target object does not scatter light. However, since light control sheets switch between a transparent state (bright state) and an opaque state (dark state) through scattering and transmission, the measurement method that uses linear transmittance conforming to JIS K 0115:2004 cannot measure the absorbance in an opaque state for the reasons mentioned above. Therefore, the inventor has decided to use the total light transmittance. Specifically, the total light transmittance of a sample was measured using a haze meter, and the absorbance was calculated using a method conforming to JIS K 0115:2004. The light source of the absorptiometer is a white LED that emits visible light of 380 nm or more and 780 nm or less. The photometric unit of the absorptiometer detects light intensity over the entire visible light range of 380 nm or more and to 780 nm or less.

The light control device 10 weakens the straight light that passes through the light control device 10 in an opaque state, as the optical path length of the light incident on the light control layer 21 becomes longer. If it is required to increase light absorbance of the light control device 10 in an opaque state by weakening the straight light, the light absorbance may be adjusted by increasing the thickness of the light control layer 21. Alternatively, if it is required to increase absorbance of the light control device 10 in an opaque state by weakening the straight light, the absorbance may be adjusted by increasing the number of light control layers 21 included in the light control device 10.

### Absorbance difference (i) of light control device 10

The absorbance of the light control device 10 in an opaque state reflects the fact that the light scattered at the interface between the transparent polymer layer 21P and the liquid crystal composition 21LC has been absorbed by the dichroic dye DP. On the other hand, the absorbance of the light control device 10 in a transparent state reflects weak absorption of the straight light by the dichroic dye DP, but does not reflect extension of the optical path length due to light scattering, i.e., absorption due to extension of the optical path length. The absorbance difference (i) of the light control device 10 functions as an index of the degree of the length of the optical path substantially extended by light scattering due to the internal structure of the light control layer 21, the degree of absorption of the light scattered by the dichroic dye DP, and the degree of increase in absorption due to these. In other words, the absorbance difference (i) of the light control device 10 functions as an index for increasing contrast of the light control device 10.

### Absorbance ratio (ii) of light control device 10

As described above, the absorbance of the light control device 10 in a transparent state reflects, to some extent, weak absorption of straight light by the dichroic dye DP. Therefore, the thicker the light control layer 21 is, the greater the absorbance of the light control device 10 in a transparent state. Even if the light scattering per unit thickness due to the internal structure of the light control layer 21 is the same within the light control devices 10, the higher the absorbance of the light control device 10 in a transparent state, the easier it is to further increase the absorbance in an opaque state. The absorbance ratio (ii) of the light control device 10 is normalized by dividing the absorbance in an opaque state by the absorbance in a transparent state. For this reason, the absorbance ratio (ii) of the light control device 10, similarly to the absorbance difference (i), functions as an index of the degree of increase in absorption due to light scattering due to the internal structure of the light control layer 21, and further reduces the effects of thickness difference of the light control layer 21. In other words, the absorbance ratio (ii) of the light control device 10 is an index for enhancing contrast of the light control device 10 and functions as an index for greatly reflecting the internal structure of the light control layer 21.

### Absorbance (iii) of light control device 10 in transparent state

Variation in concentration of the dichroic dye DP in the light control layer 21 depends on the concentration of the dichroic dye DP and the thickness of the light control layer 21.

For example, if the thickness of the light control layer 21 is large, the energy applied to the polymerizable composition per unit mass may decrease during exposure, compared to the case where the thickness of the light control layer 21 is small. This may slow down the rate of polymerization of the polymerizable compound. Thus, it may take a long time for the dichroic dye DP present in the liquid crystal composition 21LC and the polymerizable composition to diffuse during phase separation of the liquid crystal composition 21LC, and consequently, concentration gradient of the dichroic dye DP due to insufficient concentration diffusion may be less likely to occur. On the other hand, if the rate of polymerization of the polymerizable composition becomes slow, sequential phase separation of the liquid crystal composition 21LC may occur, and therefore the density of the polymer or the density of the voids 21D may become uneven. As a result, a concentration gradient of the dichroic dye DP may occur due to variation in density of the voids 21D.

For example, if the thickness of the light control layer 21 is small, the energy applied to the polymerizable composition per unit mass may increase during exposure, compared to the case where the thickness of the light control layer 21 is large. This may increase the rate of polymerization of the polymerizable compound. Thus, it may take only a short time for the dichroic dye DP present in the liquid crystal composition 21LC and the polymerizable composition to diffuse during phase separation of the liquid crystal composition 21LC, and consequently, concentration gradient of the dichroic dye DP due to insufficient concentration diffusion may occur.

Insufficient concentration diffusion of the dichroic dye DP or fixation of the spatial bias of the dichroic dye DP may lead to easy incorporation of the dichroic dye DP into the transparent polymer layer 21P. The dichroic dye DP incorporated into the transparent polymer layer 21P is not necessarily driven like the dichroic dye DP contained in the liquid crystal composition 21LC. The dichroic dye DP incorporated into the transparent polymer layer 21P may reduce light absorption, in an opaque state, by the dichroic dye DP incorporated into the transparent polymer layer 21P, thereby preventing improvement in contrast.

As described above, the manner in which the liquid crystal composition 21LC undergoes phase separation is mostly determined by the thickness of the light control layer 21 and the rate of polymerization of the polymerizable composition. The degree to which the dichroic dye DP is incorporated into the transparent polymer layer 21P is also mostly determined by the thickness of the light control layer 21 and the rate of polymerization of the polymerizable composition. The phase separation that does not cause concentration variation of the dichroic dye DP may allow incorporation of a constant amount of the dichroic dye DP into the transparent polymer layer 21P per unit thickness thereof.

If a constant amount of the dichroic dye DP is incorporated into the transparent polymer layer 21P per unit thickness thereof, absorbance of the light control device 10 in a transparent state may have a positive proportional relationship with the thickness of the light control layer 21, such that the absorbance is greater as the thickness of the light control layer 21 increases. On the other hand, if the amount of the dichroic dye DP incorporated into the transparent polymer layer 21P is less than the constant amount, the absorbance of the light control device 10 in a transparent state may become smaller than the value obtained from the proportional relationship described above. In this case, the incorporation of the dichroic dye DP by the liquid crystal composition 21LC, which may cause concentration variation of the dichroic dye DP, is presumed to be the cause of phase separation of the liquid crystal composition 21LC.

Therefore, the absorbance (ii) of the light control device 10 in a transparent state functions as an index for the degree to which the dichroic dye DP is incorporated into the transparent polymer layer 21P. In addition, the absorbance (ii) of the light control device 10 in a transparent state also functions as an index for the degree of variation of the dichroic dye DP. That is, the absorbance (iii) of the light control device 10 in a transparent state functions as an index for providing an appropriately enhanced contrast for suppressing variation.

### [Test examples]

Some specific test examples of the light control device 10 are shown below.

The type of the light control sheet in each of the test examples is reverse type. The light control device 10 in each of the test examples is the light control device 10 of First Example. The light control sheet of each of the test examples includes alignment layers 22 and 23, transparent electrode layers 24 and 25, and transparent substrates 26 and 27. The light control sheet of each of the test examples was obtained by forming a coating film between the alignment layers 22 and 23, containing a liquid crystal compound LCM, a dichroic dye DP, a reactive mesogenic compound, a UV-curable compound, spacers 21S, and a polymerization initiator, and polymerizing the UV-curable compound in the coating film.

Materials used for forming the light control sheet of Test Example 1 are as shown below. The materials (a) to (g) are common to the light control sheets of the respective test examples. The material (h) is different between the light control sheets of the respective test examples.
(a) Alignment layers 22 and 23: Vertical alignment films
(b) Transparent electrode layers 24 and 25: Indium tin oxide
(c) Transparent substrates 26 and 27: Polyethylene terephthalate films
(d) Spacer 21S: Silica spherical particles
(e) Liquid crystal compound LCM: Mixture of cyano-based liquid crystal compound and fluorine-based liquid crystal compound
(f) Polymerization initiator: Photopolymerization initiator (Irgacure Oxe04: manufactured by BASF)
(g) Polymerizable composition: Mixture of isobornyl acrylate, pentaerythritol triacrylate, and urethane acrylate
(h) Dichroic dye DP: Azo compound-mixed dye (product name Irgaphor Black X12 DC, manufactured by BASF)

### [Test Example 1]

The formulation ratios of materials (e) to (h) for the coating liquid for producing the light control sheet of the light control device 10 of Test Example 1 are shown below.
(e) Liquid crystal compound LCM: 52 mass%
(f) Polymerization initiator: 1 mass%
(g) Polymerizable composition: 44.5 mass%
(h) Dichroic dye DP: 2.5 mass%

The coating liquid of Test Example 1 was applied onto the first alignment layer 22 so that black spacers 21S having a particle size of 25 µm were arranged on the first alignment layer 22, thereby forming a coating film of Test Example 1. Next, in the state in which the coating film of Test Example 1 was sandwiched between the first alignment layer 22 and the second alignment layer 23, 360 nm UV light was applied to the first transparent substrate 26 to form a light control sheet of Test Example 1 in which the light control layer 21 had a thickness of 25 µm. In this case, the intensity of the UV light was set to 10 mW/cm².

Using the same production method as described above except for changing the particle size of the spacers 21S to within the range of 6 µm or more and 24 µm or less, multiple light control sheets of Test Example 1 were obtained in which the respective light control layers 21 had different thicknesses in the range of 6 µm or more and 24 µm or less.

### [Test Example 2]

The formulation ratios of materials (e) to (h) in the coating liquid for producing the light control sheet of Test Example 2 are shown below. The light control sheet of Test Example 2 has a dichroic ratio (absorption coefficient ratio) different from that of the dichroic dye DP used for forming the light control sheet of Test Example 1.
(e) Liquid crystal compound LCM: 52 mass%
(f) Polymerization initiator: 1 mass%
(g) Polymerizable composition: 43 mass%
(h) Dichroic dye DP: 4 mass%

The coating liquid of Test Example 2 was applied onto the first alignment layer 22 so that black spacers 21S having a particle size of 25 µm were arranged on the first alignment layer 22, thereby forming a coating film of Test Example 2. Next, in the state in which the coating film of Test Example 2 was sandwiched between the first alignment layer 22 and the second alignment layer 23, 360 nm UV light was applied to the first transparent substrate 26 to form a light control sheet of Test Example 2 in which the light control layer 21 had a thickness of 25 µm. In this case, the intensity of the UV light was set to 10 mW/cm².

Using the same production method as described above except for changing the particle size of the spacers 21S to within the range of 6 µm or more and 24 µm or less, multiple light control sheets of Test Example 2 were obtained in which the respective light control layers 21 had different thicknesses in the range of 6 µm or more and 24 µm or less.

### [Evaluation method]

For each of the light control devices 10 of the test examples, total light transmittance was measured using a measurement method according to ASTM D 1003-00. For each of the light control devices 10 of the test examples, absorbance of visible light of 380 nm or more and 780 nm or less was measured using a measurement method according to JIS K 0115:2004.

In each light control device 10 of the test examples, measurement points for absorbance were set at nine points in total in the plane of the light control sheet, i.e., the center, four corners, and an intermediate point between the center and each of the corners. An AC voltage, that is, 40 V square waves with a frequency of 50 Hz, was used as a drive signal for the light control sheet when measuring the optical characteristics. A haze meter (BYK haze-gard i instrument, manufactured by BYK Gardner) was used as a measuring instrument for total light transmittance.

For each of the light control devices 10 of the test examples, a difference was calculated for each measurement point by subtracting the absorbance of the light control device 10 in a bright state (transparent state) from the absorbance thereof in a dark state (opaque state). For each test example, an average of the differences at all the measurement points was calculated as the absorbance difference (i) for the test example.

For each of the light control devices 10 of the test examples, a ratio of the absorbance of the light control device 10 in a dark state (opaque state) to the absorbance thereof in a bright state (transparent state) was calculated for each measurement point. For each test example, an average of the ratios at all the measurement points was calculated as the absorbance ratio (ii) of the test example.

For each of the light control devices 10 of the test examples, a ratio of the total light transmittance of the light control device 10 in a bright state (transparent state) to the total light transmittance thereof in a dark state (opaque state) was calculated for each measurement point. For each test example, an average of the total light transmittance ratios at all the measurement points was calculated as a contrast for the test example. Also, a difference was calculated by subtracting the minimum value from the maximum value among the total light transmittance ratios at all the measurement points, as a variation in contrast in the test example.

For each of the light control devices 10 of the test examples, a difference was calculated by subtracting the total light transmittance of the light control device 10 in a dark state (opaque state) from the total light transmittance thereof in a bright state (transparent state) for each measurement point. For each test example, an average of the differences in total light transmittance at all the measurement points was calculated as a transmittance difference for the test example.

### [Evaluation result]

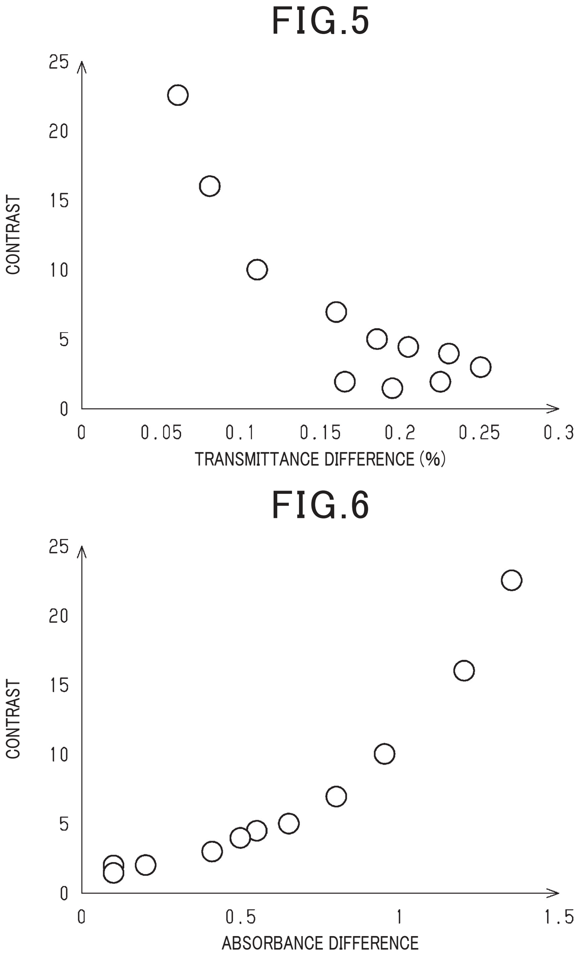

The evaluation results of the test examples are shown in Figs. 5 to 10.

Fig. 5 shows relationship between the transmittance difference (i) and contrast according to Test Example 1. As shown in Fig. 5, even when the transmittance difference was about the same, such as in the range where the transmittance difference was 0.1 or more, it was confirmed that the contrasts were significantly different from each other. In particular, in the range where a clear transmittance difference was obtained, such as a transmittance difference of 0.15 or more, there was a large variation in contrast between individual transmittance differences, and therefore no clear correlation was observed between transmittance difference and contrast.

Fig. 6 shows relationship between absorbance difference and contrast of the test examples. As shown in Fig. 6, it was found that the larger the absorbance difference (i), the higher the contrast. In particular, it was found that when the absorbance difference was 0.6 or more, contrast increased sharply compared to when the absorbance difference was less than 0.6. It was also found that when the absorbance difference was 0.8 or more, even higher contrast could be obtained.

On the other hand, the larger the absorbance difference, the larger the change in contrast with respect to the change in absorbance difference. However, the smaller the absorbance difference, the smaller the change in contrast with respect to the change in absorbance difference. When the absorbance difference (i) was 1.3 or less, it was found that the change in contrast with respect to the change in absorbance difference in the light control device 10 was suppressed, and sharp change in contrast variation could be suppressed.

It was found that when the absorbance difference was 0.8 or more and 1.2 or less, an even higher contrast could be obtained and suppressing the change in contrast relative to the change in absorbance difference in the light control device 10 was practically enhanced.

It was also found that the greater the absorbance difference of the light control device 10, the smaller the total light transmittance of the light control device 10 in an opaque state. It was found that when the absorbance difference was 0.6 or more and the total light transmittance of the light control device 10 in an opaque state, i.e., dark state, was 7% or less, an even higher contrast could be obtained in the range where the absorbance difference was 0.6 or more.

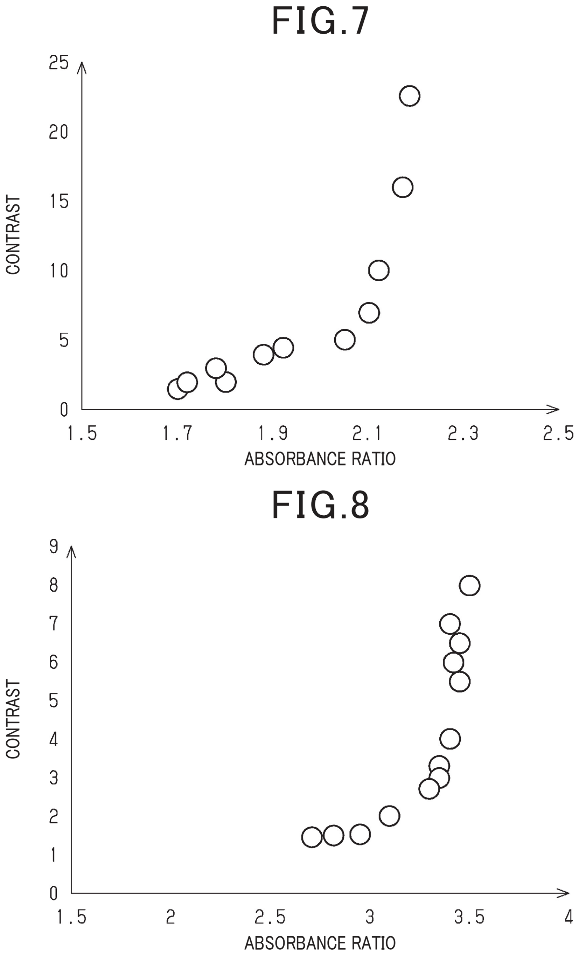

Fig. 7 shows relationship between the absorbance ratio (ii) and contrast according to Test Example 1. Fig. 8 shows relationship between the absorbance ratio (ii) and contrast according to Test Example 2.

As shown in Fig. 7, it was found that the larger the absorbance ratio (ii), the higher the contrast in Test Example 1. In particular, it was found that when the absorbance ratio was 2.1 or more, contrast increased sharply compared to when the absorbance ratio was less than 2.1. The rate of change in contrast when the absorbance ratio is 2.1 or more is greater than the rate of change in contrast when the absorbance ratio is less than 2.1. That is, it was found that contrast was sharply increased when the absorbance ratio normalized by the concentration of the dichroic dye DP, i.e., by 2.5 mass%, was 0.8 or more (2.112.5=0.84). It was also found that when the absorbance ratio was 2.1 or more, even higher contrast of 4 or more could be obtained.

As shown in Fig. 8, it was found that the larger the absorbance ratio (ii), the higher the contrast in Test Example 2. In particular, it was found that when the absorbance ratio was 3.3 or more, contrast increased sharply compared to when the absorbance ratio was less than 3.3. The rate of change in contrast when the absorbance ratio is 3.3 or more is greater than the rate of change in contrast when the absorbance ratio is less than 3.3. That is, it was found that contrast was sharply increased when the absorbance ratio normalized by the concentration of the dichroic dye DP, i.e., by 4 mass%, was 0.8 or more (3.3/4=0.83). It was also found that when the absorbance ratio was 3.3 or more, higher contrast of 3 or more could be obtained.

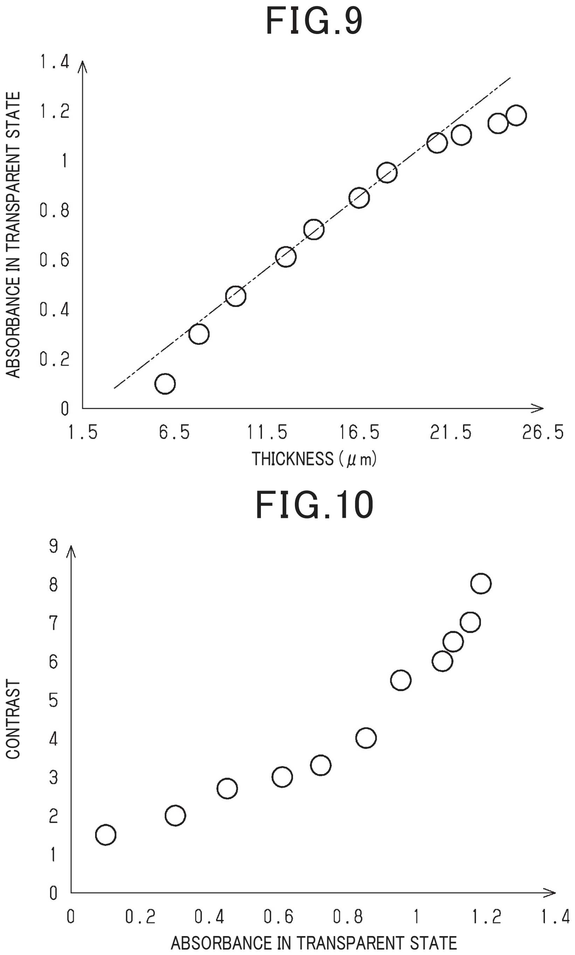

Fig. 9 shows relationship between thickness of the light control layer 21 in Test Example 1 and the absorbance (iii) of the light control device 10 in a transparent state in Test Example 1. As shown in Fig. 9, it was found that the larger the thickness of the light control layer 21, the higher the absorbance (iii) in Test Example 1. In particular, it was found that when the thickness of the light control layer 21 was 10 µm or more and 20 µm or less, the absorbance (iii) was in the range of 0.33 or more and 1.1 or less, and that there was a positive proportional relationship such that the thicker the light control layer 21, the higher the absorbance. That is, it was found that when the absorbance (iii) was 0.33 or more and 1.1 or less, the amount of the dichroic dye DP per unit thickness was approximately constant and stable.

On the other hand, it was found that when the thickness of the light control layer 21 exceeded 20 µm, i.e., when the absorbance (iii) exceeded 1.1, the absorbance was lower than the extrapolated value of the proportional relationship in the range of 0.33 or more and 1.1 or less. Also, it was found that when the thickness of the light control layer 21 was smaller than 10 µm, i.e., when the absorbance (iii) was lower than 0.33, the absorbance was also lower than the extrapolated value of the proportional relationship in the range of 0.33 or more and 1.1 or less.

Fig. 10 shows relationship between the absorbance (iii) and contrast. As shown in Fig. 10, it was found that the higher the absorbance (iii), the higher the contrast in Test Example 1. In particular, it was found that when the absorbance (iii) was 0.33 or more and 1.1 or less, contrast was enhanced in the range of 2.5 or more and 5.5 or less. It was also found that when the absorbance (iii) was 0.33 or more and 1.1 or less, variation in contrast was suppressed compared to when the absorbance exceeded 1.1.

It should be noted that when the absorbance (iii) exceeded 1.1, a sharp increase in contrast was observed, but variation in contrast also increased conforming to the contrast itself. It was also found that, if further suppression of contrast variation was required, the absorbance (iii) was preferably 0.8 or less.

According to the above embodiments, the following effects can be obtained.
(1-1) When the absorbance difference of the light control device 10 is 0.6 or more, contrast of the light control device 10 is increased.
(1-2) When the absorbance difference of the light control device 10 is 0.6 or more and 1.3 or less, contrast of the light control device 10 is increased and variation in contrast of the light control device 10 is suppressed.
(1-3) When the absorbance difference of the light control device 10 is 0.8 or more and 1.2 or less, obtaining the effect equivalent to (1-2) is practically enhanced.
(1-4) When the total light transmittance of the light control device 10 in a dark state, i.e., opaque state, is 7% or less, brightness of the light control device 10 in a dark state is suppressed, thereby practically enhancing increase in contrast.
(2-1) When the absorbance ratio of the light control device 10 is 2.1 or more, contrast of the light control device 10 is increased.
(2-2) When the absorbance ratio of the light control device 10 is 3.3 or more, increase in contrast of the light control device 10 is practically enhanced.
(2-3) When the contrast of the light control device 10 is 4 or more, variation in contrast of the light control device 10 is suppressed, with the contrast increased.
(3-1) When the absorbance of the light control device 10 in a transparent state is 0.33 or more and 1.1 or less, variation in contrast of the light control device 10 is suppressed, with the contrast increased.
(3-2) When the absorbance of the light control device 10 in a transparent state is 0.8 or less, obtaining the effect equivalent to (3-1) is practically enhanced even further.
(3-3) The light control device 10 containing the dichroic dye DP exhibits color even when it is in a transparent state due to light absorption by the dichroic dye DP. If transparency of the light control device 10 is to be evaluated based on transmittance, it may be unclear whether the good transparency exhibited in a predetermined range of transmittance is the transparency due to insufficient light absorption of the dichroic dye DP or the transparency under normal light absorption of the dichroic dye DP. In other words, if transmittance is used for evaluation, there may be various types of transmittance indices (linear, scattering, and solid angle), and the transmittance may also differ depending on the observation angle. Therefore, transmittance has not been a unified index for indicating transparency (blackness in a transparent state). In other words, the method of evaluating the light control device 10 containing the dichroic dye DP based on the total light transmittance cannot be said to enable the user of the light control device 10 to accurately capture the state of the dichroic dye DP in the light control layer 21. In this regard, the evaluation based on the absorbance due to light absorption characteristics of the dichroic dye DP when the light control device 10 is transparent, i.e., the evaluation based on whether this absorbance is in a predetermined range, enables the user of the light control device 10 to accurately capture the state of the dichroic dye DP in the light control layer 21.

## Claims

1. A light control device that reversibly changes state from transparent to opaque, comprising
a transparent polymer layer having voids; and
a liquid crystal composition containing a liquid crystal compound and a dichroic dye, and contained in the voids, wherein
the light control device in the transparent state has an absorbance of 0.33 or more and 1.1 or less.

2. The light control device according to claim 1, wherein
the light control device in the transparent state has an absorbance of 0.8 or less.

3. The light control device according to claim 1 or 2, wherein
an absorbance difference obtained by subtracting an absorbance of the light control device in the transparent state from an absorbance of the light control device in the opaque state is 0.6 or more and 1.3 or less.

4. The light control device according to claim 1 or 2, wherein
an absorbance difference obtained by subtracting an absorbance of the light control device in the transparent state from an absorbance of the light control device in the opaque state is 0.8 or more and 1.2 or less.

5. The light control device according to claim 1 or 2, wherein
an absorbance ratio that is a ratio of an absorbance of the light control device in an opaque state to an absorbance of the light control device in the transparent state is 2.1 or more.

6. The light control device according to claim 1 or 2, wherein
an absorbance ratio that is a ratio of an absorbance of the light control device in the opaque state to an absorbance of the light control device in the transparent state is 3.3 or more.

7. A light control device that reversibly changes state from transparent to opaque, comprising
a transparent polymer layer having voids; and
a liquid crystal composition containing a liquid crystal compound and a dichroic dye, and contained in the voids, wherein
an absorbance difference obtained by subtracting an absorbance of the light control device in the transparent state from an absorbance of the light control device in the opaque state is 0.6 or more.

8. The light control device according to claim 7, wherein
the absorbance difference is 1.3 or less.

9. The light control device according to claim 7, wherein
the absorbance difference is 0.8 or more and 1.2 or less.

10. The light control device according to any one of claims 7 to 9, wherein
a total light transmittance of the light control device in the opaque state is 7% or less.

11. A light control device that reversibly changes state from transparent to opaque, comprising
a transparent polymer layer having voids; and
a liquid crystal composition containing a liquid crystal compound and a dichroic dye, and contained in the voids, wherein
an absorbance ratio that is a ratio of an absorbance of the light control device in the opaque state to an absorbance of the light control device in the transparent state is 2.1 or more.

12. The light control device according to claim 11, wherein
the absorbance ratio is 3.3 or less.

13. The light control device according to claim 11, wherein
a contrast that is a ratio of a total light transmittance of the light control device in the transparent state to a total light transmittance of the light control device in the opaque state is 4 or more.

14. The light control device according to any one of claims 11 to 13, wherein
an absorbance difference obtained by subtracting an absorbance of the light control device in the transparent state from an absorbance of the light control device in the opaque state is 0.6 or more and 1.3 or less.

15. The light control device according to any one of claims 11 to 13, wherein
an absorbance difference obtained by subtracting an absorbance of the light control device in the transparent state from an absorbance of the light control device in the opaque state is 0.8 or more and 1.2 or less.

16. The light control device according to any one of claims 1 to 15, wherein
the light control device includes one light control sheet; and
the light control sheet contains the transparent polymer layer and the liquid crystal composition.

17. The light control device according to any one of claims 1 to 15, wherein
the light control device includes multiple light control sheets; and
each of the light control sheets contains the transparent polymer layer and the liquid crystal composition.
